# EUROPÄISCHE PATENTSCHRIFT

(11) **EP 0 462 458 B1**
(45) Veröffentlichungstag und Bekanntmachung des Hinweises auf die Patenterteilung: **25.10.1995**
(21) Anmeldenummer: 91109322.7
(22) Anmeldetag: 07.06.1991
(51) Int. Cl.: F02C 3/32

(54) **Verfahren zur Erhöhung des verdichterbedingten Druckgefälles der Gasturbine einer Krafterzeugungsmaschine**
Method to increase the compressor pressure ratio of a gas turbine plant
Méthode d'augmentation du taux de compression d'un compresseur d'une installation de turbine à gaz

(30) Priorität: 19.06.1990 CH 2038/90
(43) Veröffentlichungstag der Anmeldung: 27.12.1991
(73) Patentinhaber: ASEA BROWN BOVERI AG, 5400 Baden (CH)
(72) Erfinder: Frutschi, Hansulrich, CH-5223 Riniken (CH); Wettstein, Hans, CH-5442 Fislisbach (CH)

(56) Entgegenhaltungen:
- DE-B- 1 085 717
- DE-C- 560 273
- DE-C- 648 907
- DE-C- 648 907
- FR-A- 358 569
- FR-A- 1 059 635
- GB-A- 272 777

## Beschreibung

Die vorliegende Erfindung betrifft ein Verfahren zur Erhöhung des verdichterbedingten Druckgefälles in der Gasturbine einer Krafterzeugungsanlage gemäss Oberbegriff des Anspruchs 1.

### Stand der Technik

Bei Kraftwerksanlagen geht es letztlich, zwecks Minimierung der Abgasemissionen, um die Maximierung des Wirkungsgrades einer solchen Anlage. Im diesem Zusammenhang wird auf die Gasturbogruppen der neuen Generation hingewiesen, welche Wirkungsgrade zu erbringen vermögen, die noch bis vor wenigen Jahren als nicht machbar galten. Eine ausgereifte Technik bilden wohl die sogenannten Kombianlagen. Unter diesem Begriff wird das betriebliche Zusammenwirken einer Gasturbogruppe mit mindestens einem nachgeschalteten Dampfturbinenkreislauf verstanden, wobei die Gasturbinenabgase, welche an sich noch ein grosses energetisches Potential aufweisen, in einen Abhitzedampferzeuger geleitet werden, in welchem die Erzeugung des für die Beaufschlagung der Dampfturbine notwendigen Dampfes erfolgt. Dabei kann es sich bei einem solchen Abhitzedampferzeuger um einen Ein- oder Mehrdruck-Apparat handeln; des weiteren ist es möglich, den Abhitzedampferzeuger mit einer Zusatzfeuerung auszurüsten. Eine solche Kombianlage vermag nach heutigem Stand der Technik Wirkungsgrade von weit über 50% zu erzielen. Es ist offensichtlich, dass die Bestrebungen dahin gehen, diese fossil befeuerten Kraftwerksanlagen weiter zu entwickeln, erstens im Hinblick auf eine bessere Ausnutzung der fossilen Reserven, und zweiten davon ausgehend, dass von dieser Plattform aus jeder technologische Fortschritt wirtschaftlich überproportional zählt. Bei Gasturbogruppen muss ein nicht irrerelevanter Anteil der Turbinenleistung zum Antrieb des Verdichters aufgewendet werden, so dass eine Erhöhung des Druckgefälles in der Gasturbine, das zu einer höheren Wirkungsgradsausbeute der Anlage führen sollte, über eine höhere Verdichtung der Arbeitsluft im Kompressor zu erreichen wäre, mithin bilanzmässig wenig oder nichts bringt, denn diese Plus-Leistung aus der Gasturbine ginge in Form einer erhöhten Aufnahme der Wellenleistung durch den Kompressor verloren.

Aus Dokument FR-358 569 ist eine Kraftwerksanlage bekanntgeworden, in welcher ein Injektor ersichtlich ist, der durch verdichtete Luft und einen gasförmigen Brennstoff betrieben wird. Dieser Injektor hat dabei die Aufgabe, dem Brennstoff/Luft-Gemisch eine grössere Geschwindigkeit zu verleihen, bevor es in die Brennkammer der Kraftwerksanlage strömt. Danebst wird in dieser Brennkammer ein Dampf erzeugt, der losgelöst von dem Injektor dem genannten Gemisch zur Druckerhöhung beigemischt wird. Dabei ist zu berücksichtigen, dass der Betrieb einer Treibdüse eines vor der Brennkammer angeordneten Injektors nur durch ein Medium hohen Druckes zu bewerkstelligen ist. Eine Kraftwerksanlage mit einem konventionellen Dampferzeuger ist gar nicht in der Lage, eine Dampfmenge mit dem notwendigen Druck bereitzustellen. Wenn also die benötigte Dampfmenge zum Betrieb eines solchen Injektors speziell erzeugt werden muss, so ist es naheliegend, dass eine solche Bereitstellung eine Wirkungsgradverminderung der Anlage auslöst.

### Aufgabe der Erfindung

Hier greift die Erfindung ein. Der Erfindung, wie sie in den Ansprüchen gekennzeichnet ist, liegt die Aufgabe zugrunde, bei einem Verfahren der eingangs genannten Art den Wirkungsgrad über den Weg der Erhöhung des verdichterbedingten Druckgefälles in der Gasturbine zu maximieren.

Der wesentliche Vorteil der Erfindung ist darin zu sehen, dass die Druckerhöhung des Arbeitsgases in der Gasturbine einer Kraftwerksanlage ohne Inanspruchnahme der Wellenleistung der Anlage zustande kommt. Dort wo sich allenfalls eine Nachverdichtungsstufe zum vorhandenen Verdichter aus schaltungstech nischen Ueberlegungen aufdrängt, ist die durch die erfindungsgemässe Aufgabenlösung bedingte Ausbeute aus der Gasturbine um ein Mehrfaches höher als diese aufgenommene Leistung aus der zusätzlichen Verdichtung.

Ein weiterer Vorteil der Erfindung ist darin zu sehen, dass die Wirkungsgraderhöhung sowohl bei reinen Gasturbogruppen als auch bei Kombianlagen erzielt wird; des weiteren auch unabhängig davon, ob die jeweilige Schaltung eine Gleichdruckbrennkammer oder eine Isochor-Brennkammer aufweist.

Vorteilhafte und zweckmässige Weiterbildungen der erfindungsgemässen Aufgabenlösung sind in den weiteren Ansprüchen gekennzeichnet.

Im folgenden wird anhand der Zeichnung Ausführungsbeispiele der Erfindung schematisch dargestellt und näher erläutert. Alle für das unmittelbare Verständnis der Erfindung nicht erforderlichen Elemente sind fortgelassen. Die Strömungsrichtung der verschiedenen Medien ist mit Pfeilen angegeben. Gleiche Elemente sind in den verschiedenen Figuren mit den gleichen Bezugszeichen versehen.

Es zeigt:

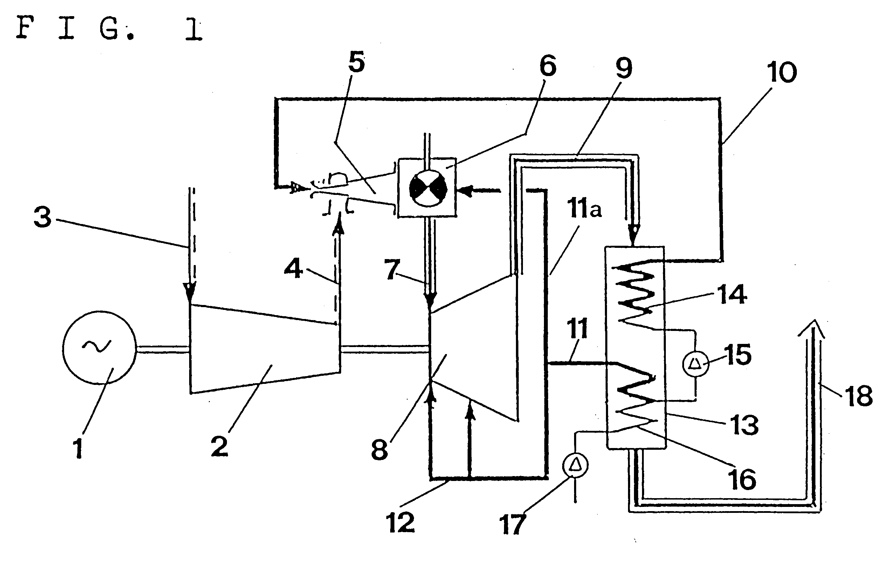

- Fig. 1: eine Schaltung einer Gasturbogruppe mit einem Abhitzedampferzeuger und Injektor,

### Beschreibung der Ausführungsbeispiele

Fig. 1 zeigt eine Gasturbogruppe, in welche ein Abhitzedampferzeuger 13 sowie ein Injektor 5 integriert sind. Die beiden letztgenannten Apparate stehen dabei in Wirkverbindung mit der Gasturbogruppe. Die Gasturbogruppe als autonome Einheit besteht aggregatenmässig aus einem Generator 1, einem Verdichter 2, einer Brennkammer 6 und einer Gasturbine 8. Die angesaugte Luft 3 wird in dem Verdichter 2 im Sinne einer Vorverdichtung komprimiert und gelangt sodann über die Leitung 4 in den Injektor 5, und zwar über dessen Fangdüse; der Injektor 5 ist dabei stromauf der Brennkammer 6 plaziert. Die dann in dieser Brennkammer 6 thermisch aufbereitete Luft beaufschlagt als Heissgas 7 die Gasturbine 8. Die Gasturbinenabgase 9 werden dem Abhitzedampferzeuger 13 zugeführt, wo sie energetisch weiter genutzt werden. Aus der freigesetzten thermischen Energie aus diesen Abgasen wird in einem Hochdruck-Dampferzeugungsteil 14 ein Hochdruckdampf 10 erzeugt, der den Injektor 5 über dessen Treibdüse beaufschlagt. Da es sich um einen Zweidruck-Abhitzedampferzeuger 13 handelt, wird in einem weiteren Niederdruck-Dampferzeugungsteil 16 ein Niederdruckdampf 11 erzeugt, Ein Teil dieses Dampfes 11a wird der Brennkammer 6 zugeführt, und bewirkt dort beispielsweise eine Verminderung der NOx-Emissionen. Ein anderer Teil des Niederdruckdampfes 12 wirkt als Kühlmittel für die Gasturbine 8. Die abgekühlten Abgase werden dann als Rauchgase 18 über einen Kamin ins Freie abgeblasen. Eine erste Speisewasserpumpe 17 sorgt für den Medium-Nachschub in den Abhitzedampferzeuger 13, während eine zweite Speisewasserpumpe 15 die Förderung des Mediums zwischen Niederdruck- und Hochdruck-Dampferzeugungsteil besorgt. Somit liegt hier eine Schaltung vor, die so gestaltet ist, dass der im Abhitzedampferzeuger 13 erzeugte Hochdruckdampf 10 die Treibdüse des Injektors 13 beaufschlagt und bewirkt, dass die vom Verdichter 2 kommende vorverdichtete Luft 4, die über die Fangdüse in den Injektor 5 strömt, weiterverdichtet wird, bevor beide Medien 4 und 10 in die stromab des Injektors 5 plazierte Brennkammer 6 strömen. Dadurch erfährt die Gasturbine 8 ein grösseres Druckgefälle, als dies nur mittels des Verdichters 2 allein aufgebaut werden könnte. So wird die dem im Abhitzedampferzeuger 13 erzeugten Dampf innewohnende Exergie besser genutzt, womit sowohl die Leistung als auch der Wirkungsgrad eine Erhöhung gegenüber der bekannten Anlagen mit simpler Dampfeinblasung erfahren. Weil nun zur Beaufschlagung des Injektors 5 ein Dampf hohen Druckes angewendet werden muss, können im entsprechenden Dampferzeugungsteil 14 die Abgase 9 aus der Gasturbine 8 nicht hinreichend genutzt werden. Daher wird vorteilhafterweise dieser ersten Stufe der bereits oben erwähnte Niederdruck-Dampferzeugungsteil nachgeschaltet, dessen Dampf 11, wie ebenfalls oben kurz erwähnt, der Gasturbine 8 als Kühlmittel 12 und/oder gegen einen zu hohen NOx-Ausstoss als Moderatormedium 11 der Verbrennung in der Brennkammer 6 zugeführt wird. Nätürlich trägt auch dieser Niederdruckdampf zur Erhöhunh von Leistung und Wirkungsgrad bei. Aus betrieblicher Sicht ergibt sich durch die Wirkung des Injektors 5 der Vorteil, dass mit zunehmendem Dampfstrom 10 der Druck vor der Turbine 8 ansteigt, ohne dass der Gegendruck des Verdichters 2 unzulässig wachsen würde. So wird immer eine genügend grosse Pumpmarge des Verdichters 2 gewahrt. Selbstverständlich kann diese Schaltung nach Fig. 1 als Kombianlage ausgelegt werden, indem ein Dampfteil aus dem Abhitzedampferzeuger 13 eine diesem nachgeschaltete, nicht ersichtliche Dampfturbine beaufschlagen würde. Eine solche Anordnung kann in Verbindung mit einer Zusatzfeuerung in der Abgas-Leitung 9, spätestens im Abhitzedampferzeuger 13 von Vorteil sein.

## Patentansprüche

1. Verfahren zur Erhöhung des verdichterbedingten Druckgefälles der Gasturbine einer Krafterzeugungsanlage, welche im wesentlichen aus mindestens einem Verdichter (2), einer stromab des Verdichters plazierten Brennkammer (6) und einer stromab der Brennkammer wirkenden Turbine (8) besteht, wobei stromauf der Turbine (8) ein Injektor (5) wirkt, durch dessen Fangdüse die vorverdichtete Luft (4) aus dem Verdichter (2) strömt, wobei diese Luft (4) mittels Beaufschlagung der Treibdüse des Injektors (5) durch ein anderes Medium (10) weiterverdichtet wird, dadurch gekennzeichnet, dass der Injektor (5) stromauf der Brennkammer (6) wirkt, dass stromab der Turbine (8) durch deren Abgase (9) ein Abhitzedampferzeuger (13) mit einem Hochdruck-Dampferzeugungsteil (14) betrieben wird, und dass die Treibdüse des Injektors (5) durch anfallenden Dampf (10) aus dem Hochdruck-Dampferzeugungsteil (14) des Abhitzedampferzeugers (13) beaufschlagt wird.

2. Verfahren nach Anspruch 1, dadurch gekennzeichnet, dass der Abhitzedampferzeuger (13) einen Niederdruckdampf (11) erzeugt, der in die Turbine (8) und/oder in die Brennkammer (6) rückgeführt wird.

3. Verfahren nach Anspruch 1, dadurch gekennzeichnet, dass die Brennkammer (6) als Gleichdruck- oder Isochore-Brennkammer betrieben wird.

## Claims

1. Method for increasing the compressor-related pressure drop of the gas turbine of a power plant which essentially comprises at least one compressor (2), a combustion chamber (6) placed downstream of the compressor and a turbine (8) acting downstream of the combustion chamber, an injector (5), through the mixing nozzle of which the precompressed air (4) from the compressor (2) flows, acting upstream of the turbine (8), this air (4) being further compressed by the admission to the driving nozzle of the injector (5) of another medium (10), characterized in that the injector (5) acts upstream of the combustion chamber (6), in that downstream of the turbine (8) a waste-heat steam generator (13) with a high-pressure steam-generating part (14) is operated by means of the exhaust gases (9) from the turbine, and in that steam (10) produced in the high-pressure steam-generating part (14) of the waste-heat steam generator (13) is admitted to the driving nozzle of the injector (5).

2. Method according to Claim 1, characterized in that the waste-heat steam generator (13) generates a low-pressure steam (11) which is fed back into the turbine (8) and/or into the combustion chamber (6).

3. Method according to Claim 1 characterized in that the combustion chamber (6) is operated as a constant-pressure combustion chamber or an isochoric combustion chamber.

## Revendications

1. Procédé d'augmentation du taux de compression d'un compresseur d'une installation de turbine à gaz, qui se compose essentiellement d'au moins un compresseur (2), d'une chambre de combustion (6) placée en aval du compresseur et d'une turbine (8) opérant en aval de la chambre de combustion, dans lequel, en amont de la turbine (8), agit un injecteur (5) par la partie divergente duquel s'écoule l'air précomprimé (4) provenant du compresseur (2), cet air (4) étant surcomprimé en alimentant la partie convergente de l'injecteur (5) avec un autre fluide (10), caractérisé en ce que l'injecteur (5) opère en amont de la chambre de combustion (6), en ce qu'un générateur de vapeur à récupération de chaleur (13) avec une partie de générateur de vapeur à haute pression (14) fonctionne en aval de la turbine (8) avec les gaz d'échappement (9) de celle-ci, et en ce que la partie convergente de l'injecteur (5) est alimentée par de la vapeur produite (10) provenant de la partie de générateur de vapeur à haute pression (14) du générateur de vapeur à récupération de chaleur (13).

2. Procédé suivant la revendication 1, caractérisé en ce que le générateur de vapeur à récupération de chaleur (13) produit une vapeur à basse pression (11), qui est recyclée dans la turbine (8) et/ou dans la chambre de combustion (6).

3. Procédé suivant la revendication 1, caractérisé en ce que la chambre de combustion (6) fonctionne comme une chambre de combustion à pression constante ou isochore.
